# EUROPEAN PATENT APPLICATION

(11) **EP 2 129 044 A1**
(43) Date of publication of application: **02.12.2009**
(21) Application number: 07817090.9
(22) Date of filing: 15.10.2007
(51) Int. Cl.: H04L 12/28

(54) **METHOD, SYSTEM AND SERVICE FOR TRANSFERRING SESSION CONTROL POWER**

(30) Priority: 25.01.2007 CN 200710002623
(71) Applicant: Huawei Technologies Co., Ltd., Longgang District, Shenzhen Guangdong 518129 (CN)
(72) Inventor: WEI, Qikun, Shenzhen Guangdong 518129 (CN); CHEN, Jian, Shenzhen Guangdong 518129 (CN); GUAN, Hongguang, Shenzhen Guangdong 518129 (CN)
(74) Representative: Pfenning, Meinig & Partner GbR
(86) International application number: PCT/CN2007/070899
(87) International publication number: WO 2008/092348

(57) **Abstract**

A method, a system and a server for transferring session control right, relating to communication field, are provided in the present invention. The method includes: receiving a request for transferring session control right; negotiating about session transfer with a client of which the control right is to be taken over or a client which is to take over the control right based on the received request for transferring session control right; and transferring the session control right to the client which is to take over the control right after a successful negotiation. The server includes a request receiving module, a negotiating module and a control right transferring module. Therefore, session control right can be transferred between various clients, which facilitates user with a better control over session.

## Description

### FIELD OF THE INVENTION

The present invention relates to communication field, and more specifically, to a method, a system and a server for transferring session control right.

### BACKGROUND

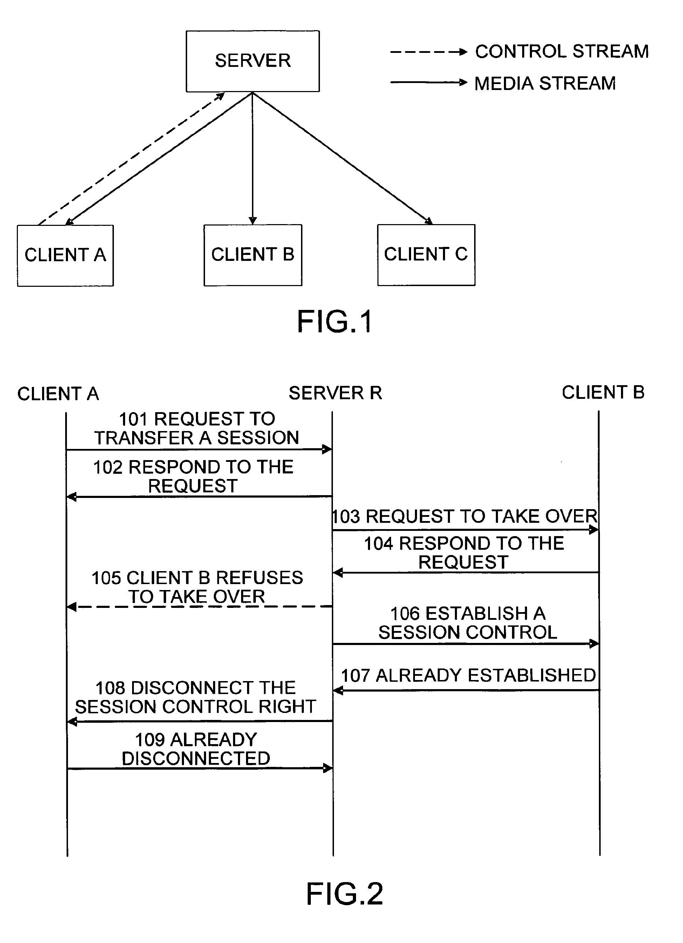

Currently, Media On Demand (MOD) services generally adopt a method that separates control signaling from media stream. Referring to Figure 1, the principle of MOD services is illustrated. For instance, client A orders a multicast stream, and other clients, i.e. client B and client C, join in a multicast group for watching, where control streaming is sent from client A. Terminals may be a PC, a TV set (set-top box), or a mobile phone, etc.

Real Time streaming Protocol (RTSP) is a commonly used media transmission control protocol at present. A service on demand adopting RTSP has following procedures.

An RTSP client initiates a Transmission Control Protocol (TCP) connection to an RTSP server. After the connection is established, client and server exchange session control information via the connection. A transmission channel of Real-time Transport Protocol (RTP) is set up after initial negotiations about source address, destination address, coding and decoding formats of the media stream. Usually, RTP utilizes a User Datagram Protocol (UDP) format for transmission in order to ensure media transmission efficiency.

Among these, two types of signaling elements, i.e. "method" and "header", are included in RTSP. "Method" indicates what operation the command refers to, e.g., "PLAY method" refers to playing and "TEARDOWN method" refers to disconnecting a session. "Header" indicates a value of a specific attributor. For instance, "range header" refers to a time range. These two data form the basis of an RTSP signaling. For instance, PLAY method+ "range : npt=10" indicates that the client requests to start playing a film from the 10th second of the film.

In research of RTSP, the inventors discover that in some situations, a controller who orders the program needs to transfer the control right to anther person, or to transfer the control right from one terminal to anther terminal. For instance, a teacher in an office orders a teaching documentary video for her students. For some reasons, she has to leave the office. However, the playing of documentary video needs to be controlled. Or, in the case of multi-party conference, there is also a need for transferring the control right. For instance, a conference organizer locates video contents that the organizer wants to share on an RTSP server, and then sets up an RTSP session linked to a streaming server. The destination of media streams is a multicast group, where others join for watching. A controller needs to control playing progress according to the requirement. Therefore, the controller also has a need for transferring session control right. However, no method for transferring session control right is provided in the prior art, which brings inconvenience to the user.

### SUMMARY

In order to solve the problem that prior arts fail to transfer session control right, a method, a system, and a server for transferring session control right are provided according to embodiments of the present invention, so that session control right is transferred. The technical solution is described as follows.

A method for transferring session control right includes:
receiving a request for transferring session control right;
negotiating about session transfer with a client of which the session control right is to be taken over or with a client which is to take over the session control right, based on the request for transferring session control right; and
transferring the session control right to the client which is to take over the control right after a successful negotiation.

A system for transferring session control right is further provided according to the embodiments of the present invention. The system includes clients and a server, wherein the server includes:
a request receiving module, configured to receive a request for transferring session control right;
a negotiating module, configured to negotiate about session transfer with a client of which the session control right is to be taken over or with a client which is to take over the session control right after the request receiving module receives the request for transferring session control right; and
a control right transferring module, configured to transfer session control right to the client which is to take over the session control right after a successful negotiation conducted by the negotiating module.

A server is further provided according to the embodiments of the present invention. The server includes:
a request receiving module, configured to receive a request for transferring session control right;
a negotiating module, configured to negotiate about a session transfer with a client of which the session control right is to be taken over or a client which is to take over the session control right after the request receiving module receives the request for transferring session control right; and
a control right transferring module, configured to transfer session control right to the client which is to take over the session control right after a successful negotiation conducted by the negotiating module.

With the technique of transferring session control right provided according to the embodiments of the present invention, session control right can be transferred between various clients, which facilitates user with a better control over session and a better usage of streaming media.

### BRIEF DESCRIPTION OF THE DRAWINGS

Figure 1 is a schematic of a MOD service according to the prior art;

Figure 2 is an information interaction schematic of a method for actively transferring session control right according to a first embodiment of the present invention;

Figure 3 is an information interaction schematic of a method for passively transferring session control right according to a second embodiment of the present invention;

Figure 4 is an information interaction schematic of an inquiry method according to the second embodiment of the present invention;

Figure 5 is a schematic of a system for transferring session control right according to a third embodiment of the present invention; and

Figure 6 is a schematic of a server according to a fourth embodiment of the present invention.

### DETAILED DESCRIPTION

Detailed description is made to the present invention in conjunction with the accompanying drawings, while the invention is not intended to be limited to the below embodiments.

According to embodiments of the present invention, the transfer of session control right is realized by information interactions between terminals and a server. The transferring method can be categorized into two types. One is an active transfer where a client controlling a session at present sends a request to a server, requesting for having the session control right taken out. The other is a passive transfer where a client sends a request to a server for taking over a session control right.

When clients are accessing a server, the server may perform identity authentication for the clients, and may entitle the clients who have passed identity authentication to corresponding permissions, where the permissions include confirming that some clients are authorized to transfer and take over the session control right. When a certain client sends a request for transferring session control right, the server first determines whether the client is authorized. Specific methods for identity authentication may be implemented by adopting authentication methods in the prior art, which are omitted herein.

### Embodiment 1

Referring to Figure 2, a method for actively transferring session control right is provided in this embodiment. In the present embodiment, client A is regarded as a first client and client B is regarded as a second client. The method includes following steps.

Step 101: Client A sends a request to a server for transferring a session. Relevant information of the session to be transferred, such as identification information, specifically, session ID, Universal Resource Identifier (URI), etc., may be included in the message. If client A simultaneously takes control over a plurality of sessions with the server, identification information which uniquely identifies the session needs to be included in the message. Client A points out a destination in the message to which the session control right is transferred, wherein the destination is client B in this embodiment. Identification information, such as IP address of client B or user name of client B, etc., may be pointed out for identifying client B. If no destination is pointed out, the server responds a failure message and indicates the reason for failure.

Step 102: The server determines whether client A is authorized to apply for transferring session control right. If client A is not authorized, a failure message is responded to client A, indicating that client A is not authorized. Otherwise, a message is responded to client A, indicating that the server approves the application. And then, the server detects whether client A points out a destination and whether the destination is authorized for receiving. If there is a destination but without an authorization, a failure message is responded to client A, indicating that the destination is not authorized. If the destination is authorized, step 103 is performed.

Step 103: The server requests client B to take over the session according to the identification information of client B in the request message from client A. The request may contain some session information ( such as session ID, URI ), media description information and some client A related information, which may facilitate client B to make a decision.

Step 104: Client B determines whether to accept the session control right according to the contents of request message. If client B refuses to accept the session control right, information indicative of refusing to take over the session is responded to the sever. If client B approves of accepting the session control right, information indicative of approving of taking over the session is responded to the server.

Step 105: The server determines that client B refuses to take over the session control right according to the responded information from client B, and notifies client A that client B refuses to take over the session control right. Or the server has already sent a notification to client B, after a period of time however, there is no response from client B. The sever also performs such operation and then terminates the procedure.

Step 106: The server determines that client B approves of taking over the session according to the responded information from client B. And then the server notifies client B that adequate session control information needs to be included in the message, ensuring that client B can perform a normal session control.

Step 107: Client B responds to the server, indicating that client B is ready to control the session.

Step 108: After the server receives the information responded from client B indicating that client B is ready, the server notifies client A to disconnect the session control right.

Step 109: Client A disconnects the control over the session, and responds to the server that the control has been disconnected.

After the server receives the information that client A has already disconnected the control, the server transfers the session control right to client B.

### Embodiment 2

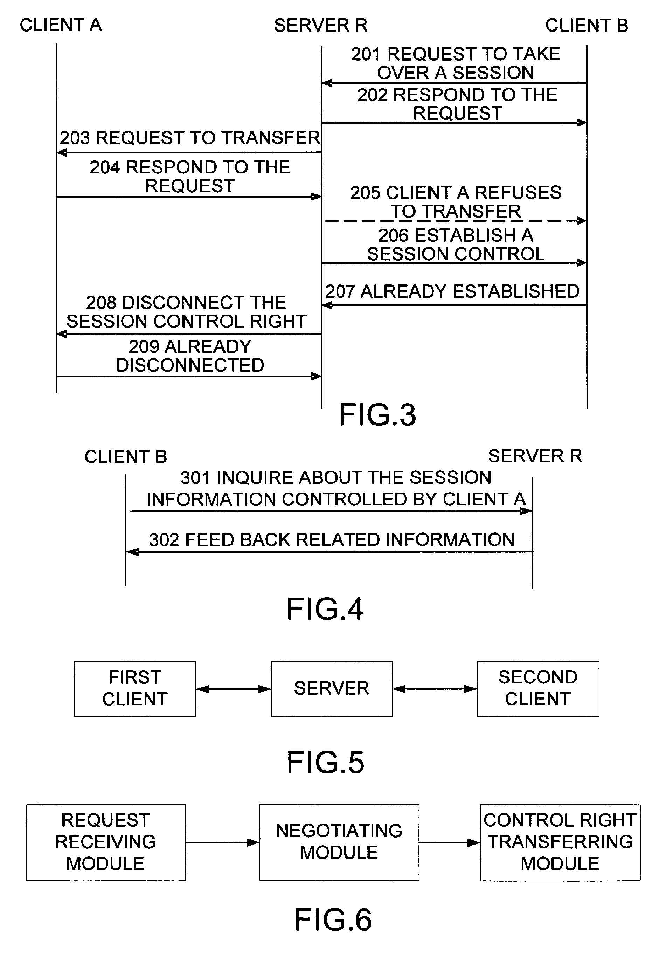

Referring to Figure 3, a method for passively transferring session control right is provided in this embodiment. In the present embodiment, Client A is regarded as a first client and client B is regarded as a second client. The method includes following steps.

Step 201: Client B sends a request to a server for transferring control right of a session. In this embodiment, client B requests to take over the control right of a session from client A. Client B may directly point out the session for receiving in the message, such as identification information of the session controlled by client A, i.e. session ID, URI, etc. And client B may also point out indirectly, such as identity information of client A, i.e. information including client A's IP address, user name, etc. If client B wants to take over a session compulsively, information of a compulsive session takeover is pointed out in the request message. When client B has a higher priority level than that of client A, then client B is authorized to take over the session control right compulsively from client A. Otherwise, when client B has a priority level no higher than that of client A, then client B is not authorized to take over the session control right compulsively from client A.

Step 202: After the server receives the request from client B, the server determines whether client B is authorized for the takeover according to the contents of request message. There would be four cases.

1) Client B is not authorized for takeover, then the server directly responds a failure message indicating that client B is not authorized.

2) Client B is authorized for takeover, then the server checks whether the session requested by client B is in existence. If client B directly points out a session while the session does not exist, then a failure message is responded to client B indicating that the session does not exist.

3) Client B is authorized for takeover, if client B points out the session indirectly, that is, client B points out client A while client A does not exist, or client A exists but with no session in control, or a specific session needs to be pointed out when a plurality of sessions are controlled by client A, so that the server responds a failure message to client B indicative of corresponding failure information.

4) If client B points out a compulsive takeover, but is not authorized for the compulsive takeover, the server then responds a failure message to client B, which informs that client B is not authorized for the compulsive takeover.

If the above mentioned reasons for failure do not exist, the server may respond to client B, indicating that the server approves the request and is processing the request.

Step 203: The server notifies client A that client B is ready to take over a session. Related information about client B and the session needs to be included in the message, which may facilitate client A to make a decision. If client B has a higher priority level than that of client A, indicating that client B is authorized for a compulsive takeover, then the server may notify client A that client B will take over the session compulsively.

Step 204: If it is a compulsive takeover, client A will notify the server that client A approves of transferring the session control right. If it is not a compulsive takeover, client A will notify the server whether client A approves of transferring the session control right according to the client B related information (such as IP address, user name) and the will of client A.

Step 205: After the server receives a response from client A and if the server considers that client A refuses to transfer, then the server notifies client B of the reason for failure. Or, the server has already notified client A, after a period of time however, there is still no response from client A. The server considers likewise, that client A refuses to transfer, and notifies client B of the reason for failure, and then terminates the procedure.

Step 206: After the server receives a response from client A and if the server considers that client A approves the transfer, then the server notifies client B. Adequate session control information needs to be included in the message, ensuring that client B can perform a normal session control.

Step 207: Client B responds to the server, indicating that client B is ready to control the session.

Step 208: The server notifies client A to disconnect the session control.

Step 209: Client A responds to the server that the control has been disconnected.

After the server receives the information that client A has already disconnected the control, the server transfers the session control right to client B.

Client A may sometimes have a plurality of sessions in control. In order to inform client B of the plurality of sessions controlled by client A, and to enable client B to select one session out of the plurality of sessions, from which the control right is transferred, the present embodiment provides an inquiry method to be performed prior to step 201. Referring to Figure 4, the method includes following steps.

Step 301: Client B sends a request to the server for the session information controlled by client A. Client B needs to provide identification information that may identify client A, such as user name of client A, IP address of client A, etc., which facilitates the server to make a response.

Step 302: After receiving the request from client B, the server first determines whether client B is authorized to make an inquiry. If not, failure information is directly responded, indicating that client B is not authorized. If client B is authorized, the server checks whether there is any session connected between client A and the server. If no session is connected between client A and the server, failure information is returned, indicating that client B cannot find session information of client A. Otherwise, if there are sessions connected between client A and the server, information of all sessions of client A is returned to client B. The information may specifically include information needed by client B such as session URI, session ID, media description, etc.

For instance, a CONTROL method is defined in RTSP to transfer session control right. A session description parameter, a=rtspcont, is defined to indicate a specific operation type of a command. Such as, a=rtspcont:: inquire, indicates that session information controlled by a certain client is inquired this time.

An inquire command is taken as an example as follows.
Client B sends an inquire command to the server, inquiring about session information controlled by a client with IP address of 192.168.1.2.
B->S: CONTROL 192.168.1.2 RTSP/2.0
CSeq: 1
User-Agent: PhonyClient/1.2
Content-Type: application/sdp
Content-Length: 21
a=rtspcont: inquire

The server sends a response to inform client B that the session ID is 12345678, the URI in RTSP is "rtsp://example.com/ring.avi", the brief introduction of the session is "an example video", wherein the session is controlled by the other party. That is:
S->B: RTSP/2.0 200 OK
CSeq: 1
Server: PhonyServer/1.0
Content-Type: text
Content-Length: 72
a=session: 12345678
u=rtsp://example.com/ring.avi
i=an example video

If something abnormal occurs during the process of transferring session control right, for instance, the server cannot receive a response message from client B during some time period, then the transfer of session control right is regarded as a failure. The session is still controlled by client A at this point.

Administrators may compulsively transfer the control right over a certain session via some configurations according to the requirements.

### Embodiment 3

Referring to Figure 5, a system for transferring session control right is provided according to the present embodiment. The system includes a first client, a second client and a server.

The first client is configured to send a request to the server for transferring session control right to the second client.

The server is configured to receive the request from the first client and to negotiate with the second client over the session transfer based on the request. After a successful negotiation, the first client disconnects the session control right.

The second client is configured to take over the session control right after the first client disconnects the session control right.

The first client, the second client and the server of the system for transferring session control right according to the present embodiment may also operate as follows.

The second client is configured to send a request to the server for taking over the session control right from the first client.

The server is configured to receive the request from the second client and to negotiate with the first client over the session transfer based on the request. After a successful negotiation, the first client disconnects the session control right.

The second client is configured to take over the session control right after the first client disconnects the session control right.

### Embodiment 4

Referring to Figure 6, a server according to the present embodiment includes:
a request receiving module, configured to receive a request from a first client for transferring session control right to a second client, or a request from the second client for taking over the session control right from the first client;
a negotiating module, configured to negotiate with the second client about session transfer after the request receiving module receives the request from the first client for transferring session control right to the second client, or to negotiate with the first client about session transfer after the request receiving module receives the request from the second client for taking over the session control right from the first client;
a control right transferring module, configured to disconnect the session control right from the first client and to transfer the session control right to the second client after a successful negotiation by the negotiating module.

In order to facilitate the client to make inquiry, the server also includes an inquiring module configured to enable the second client to inquire about all session information on the first client and to send a request to the request receiving module based on an inquiry result.

The above embodiments may be implemented by software, i.e., by programming languages such as C language, C++ language, etc. Such software may be stored in a readable storage medium, e.g. in a computer hard disk, a floppy disk or a compact disk.

According to the above embodiments, session control right may be transferred between various clients, thereby facilitating user with a better control over session.

The foregoing embodiments are merely preferred implementations of the present invention. Common variations and equivalents made by those skilled in the art based on the technical solutions of the present invention shall be construed as fall within the scope of the present invention.

## Claims

1. A method for transferring session control right, **characterized in** comprising:
receiving a request for transferring session control right;
negotiating about session transfer with a client of which the session control right is to be taken over or with a client which is to take over the session control right, based on the request for transferring session control right; and
transferring the session control right to the client which is to take over the control right after a successful negotiation.

2. The method of claim 1, **characterized in that**
the request comprises identification information of the session, identity information of the client which is to take over the control right; or
the request comprises identification information of the session, and/or identity information of the client of which the control right is taken over.

3. The method of claim 2, **characterized in that**, the negotiating about session transfer comprises:
sending, by a server, the identification information of the session and the identity information of the client of which the control right is to be taken over to the client which is to take over the control right, and requesting the client which is to take over the control right to take over the session control right; and
determining, by the client which is to take over the control right, whether to take over the session control right based on the information sent from the server; wherein if it is determined to take over the session control right, information indicative of approving of taking over the session control right is responded to the server; otherwise, information indicative of refusing to take over the session control right is responded to the server.

4. The method of claim 2, **characterized in that**, the negotiating about session transfer comprises:
sending, by a server, the identification information of the session and/or the identity information of the client which is to take over the control right to the client of which the control right is to be taken over, and informing the client of which the control right is to be taken over that the client which is to take over the control right is ready to take over the session control right; and
determining, by the client of which the control right is to be taken over, whether to approve of transferring session control right based on the information sent from the server, if it is determined to approve of transferring the session control right, information indicative of approving transferring the session control right is responded to the server, otherwise, information indicative of refusing to transfer the session control right is responded to the server.

5. The method of claim 2, **characterized in that**, the request further comprises compulsory takeover information, and accordingly, the negotiating about session transfer comprises:
sending, by a server, the identification information of the session and/or the identity information of the client which is to take over the control right to the client of which the control right is to be taken over, and meanwhile, sending, by the server, the compulsory takeover information to the client of which the control right is to be taken over, and informing the client of which the control right is to be taken over that the client which is to take over the control right will compulsorily take over the session control right; and
sending, by the client of which the control right is to be taken over, to the server information indicative of approving transferring the control right, based on the information sent from the server.

6. The method of claim 1, **characterized in that**, the transferring session control right to the client which is to take over the control right comprises:
sending, by a server, a session control message to the client which is to take over the control right; and taking over the session control right by the client which is to take over the control right.

7. The method of claim 1, **characterized in** further comprising a step prior to the method for transferring session control right, the step comprising:
sending, by the client which is to take over the control right to a server, a request for inquiring session information controlled by the client of which the control right is to be taken over; and
determining, after the server receives the request from the client which is to take over the control right, whether the client which is to take over the control right is authorized for inquiry, wherein if the client which is to take over the control right is not authorized, failure information is directly returned; otherwise, session information controlled by the client of which the control right is taken over is returned to the client which is to take over the control right.

8. A system for transferring session control right, comprising clients and a server, **characterized in that**, the server comprises:
a request receiving module, configured to receive a request for transferring session control right;
a negotiating module, configured to negotiate about session transfer with a client of which the session control right is to be taken over or with a client which is to take over the session control right after the request receiving module receives the request for transferring session control right; and
a control right transferring module, configured to transfer session control right to the client which is to take over the session control right after a successful negotiation conducted by the negotiating module.

9. A server, **characterized in** comprising:
a request receiving module, configured to receive a request for transferring session control right;
a negotiating module, configured to negotiate about session transfer with a client of which the session control right is to be taken over or with a client which is to take over the session control right after the request receiving module receives the request for transferring session control right; and
a control right transferring module, configured to transfer session control right to the client which is to take over the session control right after a successful negotiation conducted by the negotiating module.

10. The server of claim 9, **characterized in** further comprising an inquiring module, configured to enable the client which is to take over the control right to inquire about session information on the client of which the session control right is to be taken over, and to return an inquiry result to the client which is to take over the control right.
